# EUROPÄISCHE PATENTANMELDUNG

(11) **EP 1 584 366 A1**
(43) Veröffentlichungstag der Anmeldung: **12.10.2005**
(21) Anmeldenummer: 05005923.7
(22) Anmeldetag: 18.03.2005
(51) Int. Cl.: B01D 35/16

(54) **Filtervorrichtung**

(30) Priorität: 07.04.2004 DE 102004017079
(71) Anmelder: E. Begerow GmbH & Co., D-55450 Langenlonsheim (DE)
(72) Erfinder: Pfeiffer, Werner, Dipl.-Ing., 55452 Guldental (DE); Amtmann, Till, Dipl.-Ing., 55559 Bretzenheim (DE)
(74) Vertreter: Bartels & Partner

(57) **Zusammenfassung**

2. Bei einer Filtervorrichtung mit einem Filtergehäuse 1, in dem mindestens ein Haupt-Filterelement 10 einen Unfiltratraum 19 von einem Filtratraum 13 trennt, mit einem Unfiltrat-Zulauf 18 zum Zuführen von zu filtrierendem Fluid zum Unfiltratraum 19, einem Filtrat-Auslauf 20 zum Abführen des Filtrats aus dem Filtratraum 13, einem Restfilterelement 14 zum Filtrieren von Restmengen an Unfiltrat, die, ohne in den Filtratraum 13 zu gelangen, am Grund des Filtergehäuses 1 verbleiben, und mit einem Restfiltrat-Auslauf 16 zum Abführen des Filtrats der Restmengen ist das Restfilterelement 14 in einer Vertiefung 12 des Bodens 6 des Filtergehäuses 1 so angeordnet, dass das Filtermaterial des Restfilterelementes 14 die tiefstgelegene Stelle des Filtergehäuses 1 bildet.

## Beschreibung

Die Erfindung bezieht sich auf eine Filtervorrichtung mit einem Filtergehäuse, in dem mindestens ein Haupt-Filterelement einen Unfiltratraum von einem Filtratraum trennt, mit einem Unfiltrat-Zulauf zum Zuführen von zu filtrierendem Fluid zum Unfiltratraum, einem Filtrat-Auslauf zum Abführen des Filtrats aus dem Filtratraum, einem Restfilterelement zum Filtrieren von Restmengen an Unfiltrat, die, ohne in den Filtratraum zu gelangen, am Grund des Filtergehäuses verbleiben, und mit einem Restfiltrat-Auslauf zum Abführen des Filtrats der Restmengen.

Eine Filtervorrichtung dieser Art ist bekannt, vgl. EP 0 556 188 B1. Die bekannte Vorrichtung bietet die Möglichkeit, zusätzlich zu einem Hauptfiltrationsvorgang eine Restvolumenfiltration durchzuführen, um aus Fluid-Restmengen, die nach Durchführung eines Hauptfiltrationsvorganges im Filtergehäuse verblieben sind, ein Restfiltrat zu gewinnen. Bauartbedingt eignet sich die bekannte Vorrichtung jedoch nicht dazu, die gesamte, im Filtergehäuse verbliebene Restmenge an Unfiltrat für den Restfiltratvorgang zu nutzen, weil am Ende jedes Restfiltratvorganges ein Restvolumen im Filtergehäuse verbleibt.

Aus diesem Grund eignet sich die bekannte Vorrichtung lediglich für Anwendungsfälle, bei denen es sich um Fluide handelt, bei denen der Geldwert pro Volumeneinheit ausreichend gering ist, so dass Verluste aufgrund nicht genutzter Restvolumina hingenommen werden können. Andererseits sind derartige Verluste in Anwendungsfällen, bei denen sehr teuere Fluide gehandhabt werden müssen, wie dies beispielsweise bei pharmazeutischen und biotechnologischen Prozessen der Fall ist, auf keinen Fall hinnehmbar, weil bei derartigen Prozessen selbst kleinste Restmengen einen erheblichen Wert darstellen können.

Der Erfindung liegt daher die Aufgabe zugrunde, eine Filtervorrichtung zu schaffen, die eine restlose Ausnutzung von im Filtergehäuse befindlicher Restmenge zur Restfiltrat-Gewinnung ermöglicht.

Diese Aufgabe löst erfindungsgemäß eine Vorrichtung, die die Merkmale des Patentanspruches 1 in seiner Gesamtheit aufweist.

Dadurch, dass nach dem kennzeichnenden Teil des Anspruches 1 das Filtermaterial des Restfilterelementes die tiefstgelegene Stelle des Filtergehäuses bildet, führt der Restfiltrationsvorgang zu einer vollständigen Drainage des Filtergehäuses und somit zu einer restlosen Ausnutzung des Unfiltrats zur Filtratgewinnung.

Das Restfilterelement kann durch einen Abschnitt eines ebenen Filtermaterials gebildet sein, das in der es aufnehmenden Vertiefung im Boden des Filtergehäuses so angeordnet ist, dass seine obere Anströmseite eine relativ zum Bodenbereich des Filtergehäuses tiefstgelegene Ebene definiert. Dadurch erfolgt die Restfiltration am Filtermaterial an dessen Anströmseite vollflächig bis die gesamte Restmenge das Filtermaterial passiert hat.

Bei vorteilhaften Ausführungsbeispielen ist der Boden des Filtergehäuses durch eine kreisrunde Bodenplatte gebildet, mit der ein kreiszylinderförmiger Hauptteil des Filtergehäuses verbunden ist, an dessen oberen Rand sich ein das Filtergehäuse oben abschließender Dom anschließt.

Bei solcher kreiszylindrischer Gestaltung des Filtergehäuses ist der Filtrat-Auslauf vorzugsweise im Zentrum der Bodenplatte gelegen und mit dem durch die Reinseite des Haupt-Filterelementes gebildeten Filtratraum unter Abdichtung gegenüber dem Unfiltratraum verbunden. Vorzugsweise sind hierbei die das Restfilterelement aufnehmende Vertiefung in der Bodenplatte und der Unfiltrat-Zulauf jeweils an einer radial gegenüber dem Filtrat-Auslauf versetzten Stelle der Bodenplatte angeordnet.

Das Restfilterelement kann durch einen kreisrunden Abschnitt einer Filtermaterialbahn gebildet sein, der die in der Bodenplatte ausgebildete ebenfalls kreisrunde Vertiefung überspannt.

Im Hinblick darauf, dass der Restfiltratiönsvorgang vorzugsweise so durchgeführt wird, dass das Filtergehäuse mit einem Druckgas beaufschlagt wird, um die Restmenge über das Restfilterelement abzudrücken, liegt der als Restfilterelement vorgesehene Abschnitt des Filtermaterials mit seiner Abströmseite an einem in der Vertiefung befindlichen, Fluiddurchlässe aufweisenden, plattenartigen Abstützkörper an. Der unterhalb des Abstützkörpers gelegene Boden der Vertiefung bildet vorzugsweise lediglich mit seinem umfänglichen Rand die Auflage für den Abstützkörper und erstreckt sich vom Randbereich ausgehend leicht konisch zu einem tiefer gelegenen Zentralbereich hin, in den der Restfiltrat-Auslauf mündet.

Da bei Filterelementen in Form von Abschnitten einer Filtermaterialbahn oftmals die Anströmseite und die Abströmseite des Filtermaterials unterschiedliche physikalische Eigenschaften aufweisen, sind am Restfilterelement vorzugsweise Gestaltsmerkmale oder Markierungsmittel vorgesehen, um die Anströmseite und die Abströmseite der Filtermaterialbahn anzuzeigen, um die Gefahr zu vermeiden, dass die Bedienungsperson das Restfilterelement versehentlich in falscher Lageorientierung in der Vertiefung in Stellung bringt.

Der Vorgang des Einlegens des Restfilterelementes in die Vorrichtung gestaltet sich besonders bequem und einfach, wenn die das Restfilterelement aufnehmende Vertiefung durch die Endfläche eines in eine Öffnung der Bodenplatte eingesetzten Einschubkörpers gebildet ist. Dadurch kann das Restfilterelement ausgewechselt werden, ohne das Filtergehäuse selbst öffnen zu müssen.

Nachstehend ist die Erfindung anhand von in der Zeichnung dargestellten Ausführungsbeispielen im einzelnen erläutert. Es zeigen:
- Fig. 1 einen schematisch vereinfacht gezeichneten Längsschnitt eines Ausführungsbeispieles der erfindungsgemäßen Filtervorrichtung;
- Fig. 2 eine perspektivische Schrägansicht eines zur Verwendung bei der erfindungsgemäßen Vorrichtung vorgesehenen Restfilterelementes in Form eines Abschnittes einer Filtermaterialbahn;
- Fig. 3 einen gegenüber Fig. 1 in weit größerem Maßstab und abgebrochen gezeichneten Teillängsschnitt nur desjenigen Bereiches eines Ausführungsbeispieles der Filtervorrichtung, in den das Restfilterelement von Fig. 2 eingebaut ist, und
- Fig. 4 und 5, Fig. 6 und 7 sowie Fig. 8 und 9 jeweils den Fig. 2 und 3 entsprechende Darstellungen dreier weiterer Ausführungsbeispiele der erfindungsgemäßen Filtervorrichtung.

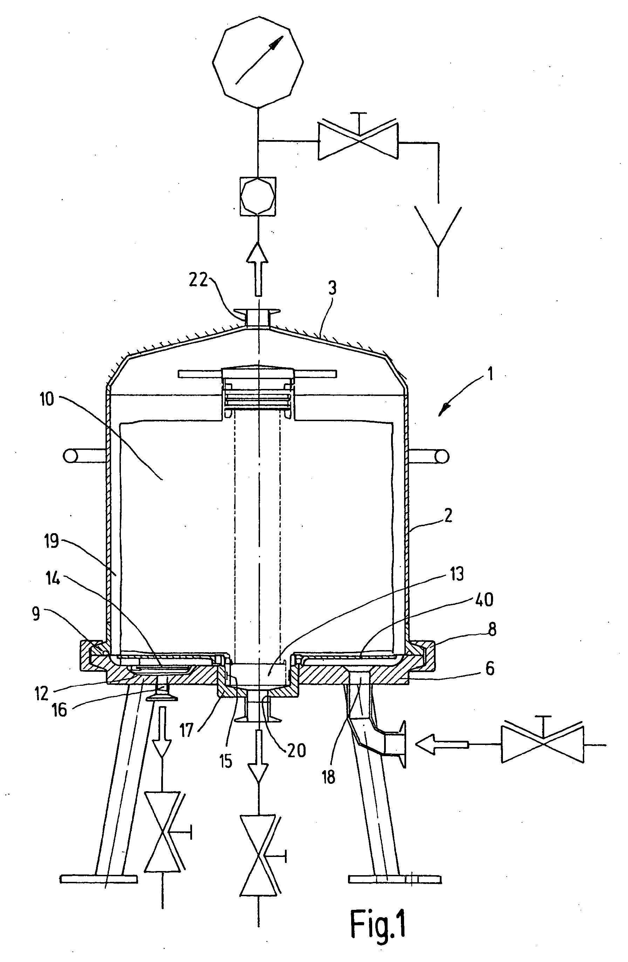

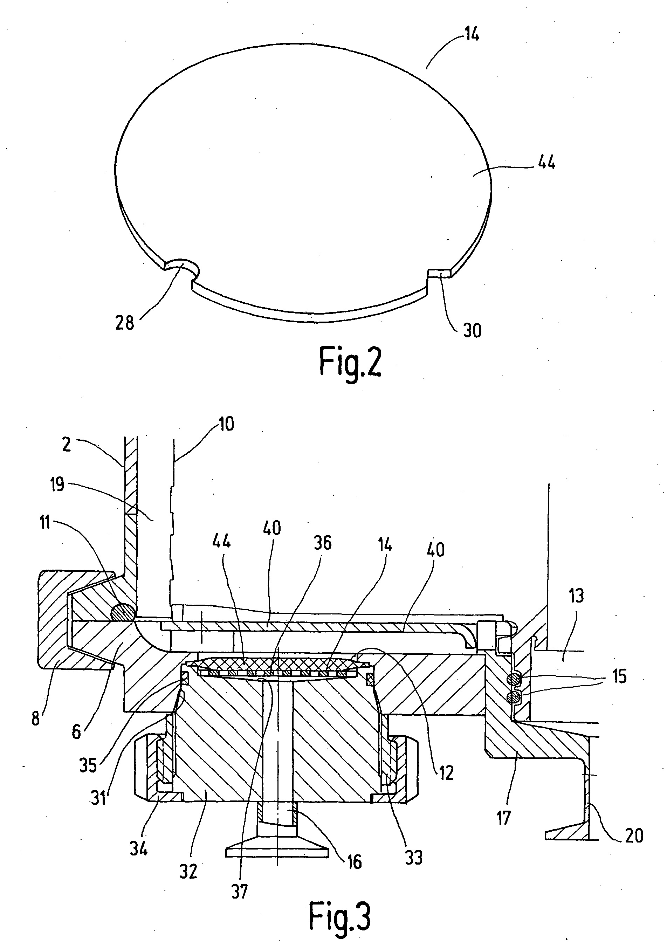

Fig. 1 zeigt eine erfindungsgemäße Filtervorrichtung mit einem als Ganzes mit 1 bezeichneten Filtergehäuse, das eine kreisrunde Bodenplatte 6, einen sich von dieser nach oben erstreckenden Gehäuse-Hauptteil 2 und einen den oberen Abschluß des Hauptteiles 2 bildenden Gehäusedom 3 aufweist. Der Hauptteil 2 ist mit der Bodenplatte 6 mittels einer Klemmschelle 8 verbunden, wobei die Abdichtung mittels einer in einer Ringnut 9 sitzenden Dichtung 11 erfolgt, die nur in Fig. 3, 5, 7 und 9 eingezeichnet ist. Das Gehäuse 1 weist in der Bodenplatte 6 einen Unfiltrat-Zulauf 18, einen Filtrat-Auslauf 20 und ein Restfilterelement 14 mit einem Restfiltrat-Auslauf 16 auf. Wie aus Fig. 1 ersichtlich ist, befindet sich der Filtrat-Auslauf 20 im Zentralbereich der Bodenplatte 6 an einem in diese eingeschweißten Stutzen 17, wobei die Innenseite des Stutzens 17 einen Sitz bildet, in dem ein Haupt-Filterlement 10 gelagert ist, dessen Reinseite innerhalb des Filtergehäuses 1 einen Filtratraum 13 definiert, der gegenüber dem das Filterelement 10 umgebenden Unfiltratraum 19 mittels einer mit der Innenwand des Stutzens 17 zusammenwirkenden Dichtung 15 abgedichtet ist.

Das Restfilterelement 14 befindet sich in einer in der Bodenplatte 6 befindlichen Vertiefung 12, die die tiefstgelegene Stelle des Filtergehäuses 1 bildet. Unterhalb des unteren Endes des Haupt-Filterelementes 10 ist in das Filtergehäuse ein Strömungsleitblech 40 eingelegt, dessen Großteil sich in einem geringen Abstand zur Oberseite der Bodenplatte 6 erstreckt und für eine bessere Fluidverteilung vorgesehen ist und um zu verhindern, dass das Haupt-Filterelement 10 vom Unfiltrat-Zulauf 18 aus direkt an seinem unteren Endrand mit Fluid beaufschlagt wird.

Unter Bezugnahme auf Fig. 2 und 3 wird ein Ausführungsbeispiel der Filtervorrichtung näher erläutert. Fig. 2 zeigt ein für das Ausführungsbeispiel von Fig. 3 vorgesehenes Restfilterelement 14 in Form eines kreisrunden Abschnittes eines Filtermaterials 44, wobei es sich um den Zuschnitt einer Filtermaterialbahn für Tiefenfiltration handelt. Bei dem vorliegenden Ausführungsbeispiel ist die Vertiefung der Bodenplatte 6, in der das Restfilterelement angeordnet, durch die Oberseite eines runden Einschubkörpers 32 gebildet, der von unten her in eine gestufte Öffnung 31 der Bodenplatte 6 eingesetzt ist und an seinem Umfang gegenüber der Bodenplatte 6 durch einen O-Ring 35 abgedichtet ist. Die Befestigung des Einschubkörpers 32 erfolgt mittels einer Überwurfmutter 34, die mit einem an der Bodenplatte 6 befestigten Gewindestutzen 33 verschraubt ist.

Die den Boden 37 der Vertiefung 12 bildende Oberseite des Einschubkörpers 32 bildet im Bereich des Umfangsrandes des Einschubkörpers 32 eine Auflage für einen plattenartigen, gelochten, kreisrunden Abstützkörper 36 sowie für den Umfangsrandbereich des auf dem Abstützkörper 36 aufliegenden Restfilterelementes 14. Vom Umfangsrand ausgehend erstreckt sich der Boden 37 an der Oberseite des Einschubkörpers 32 unterhalb des Abstützkörpers 36 leicht konisch geneigt nach innen gegen den zentralen Restfiltrat-Auslauf 16 hin.

Da das Filtermaterial 44 des Restfilterelementes 14 an Anströmseite und Abströmseite unterschiedliche physikalische Eigenschaften aufweist, ist das Filtermaterial 44 am Umfangsrand mit Gestaltsmerkmalen in Form unterschiedlich ausgebildeter Ausnehmungen 28 und 30 versehen, die am Umfang des runden Filtermaterials 44 in einem sich von 180 Winkelgrad unterscheidenden Winkelabstand voneinander angeordnet sind. Mit Hilfe von am Einschubkörper 32 vorgesehener, entsprechend komplementär geformter Vorsprünge (nicht gezeigt) am Anlagebereich des Restfilterelementes 14 ist sichergestellt, dass das Restfilterelement 14 in richtiger Lageorientierung eingebaut wird, so dass das Filtermaterial 44 mit der Abströmseite am Abstützkörper 36 anliegt.

Für den Betrieb des Ausführungsbeispieles von Fig. 2 und 3 wird das Restfilterelement 14 von Fig. 2 auf den Einschubkörper 32 oberhalb des Abstützkörpers 36 so aufgelegt, dass die nicht gezeigten Positioniervorsprünge am Einschubkörper 32 in den Ausnehmungen 28 und 30 des Restfilterelements 14 aufgenommen sind. Der Einschubkörper 32 wird sodann in die Öffnung 31 der Bodenplatte 6 eingesetzt und durch Verschrauben mittels der Überwurfmutter 34 gesichert.

Zum Befüllen des Filtergehäuses 1 ist der Filtrat-Auslauf 20 zunächst geschlossen und der Be- und Entlüftungsstützen 22 am Gehäusedom 3 geöffnet. Über den Unfiltrat-Zulauf 18 wird das Gehäuse mit Unfiltrat befüllt, und verdrängtes Gas entweicht über den Stutzen 22 am Dom 3. Ist das Gehäuse befüllt, wird der Stutzen 22 geschlossen und der Filtrat-Auslauf 20 geöffnet. Das Fluid läuft somit über das Haupt-Filterelement 10, so dass das Unfiltrat geklärt wird. Zum Beenden der Haupt-Filtration wird der Unfiltrat-Zulauf 18 geschlossen und der Stutzen 22 geöffnet, um das Gehäuse mit Druckgas zu beaufschlagen und das noch gefüllte Gehäuse 1 über das Filterelement 10 zu entleeren. Diese Entleerung kann nur bis zu einem Fluidniveau erfolgen, das am unteren Ende des Filterelements 10 gelegen ist. Bei Unterschreiten dieses Fluidpegels kann kein weiteres Fluid in den Filtratraum 13 gedrückt werden.

Da es bauartbedingt nicht möglich ist, das Filtermedium des Filterelementes 10 bis zur Bodenplatte 6 zu erstrecken, verbleibt eine Restmenge an Unfiltrat am Grund des Filtergehäuses 1. Durch den Einbau von notwendigen Bauelementen kann sich die nicht nutzbare Fluid-Restmenge noch weiter erhöhen. Beispielsweise ist dies durch den Einbau eines Fluid-Leitbleches 40 unterhalb des Filterelementes 10 bedingt.

Um diese unfiltrierte Restmenge dem Filtrat zuzuführen, wird der Restfiltrat-Auslauf 16 geöffnet, so dass die Restmenge über das am tiefsten Punkt des Filtergehäuses 1 liegende Restfilterelement 14 abgedrückt werden kann. Dadurch, dass das Restfilterelement 14 in Form eines ebenen Abschnittes von Filtermaterial 44 so plaziert ist, dass es die tiefstgelegene Ebene des Filtergehäuses 1 definiert, wird seine Anströmseite vollflächig vom Restfluid beaufschlagt, das durch das über den Stutzen 22 zugeführte Druckgas restlos abgedrückt wird. Die Größe der Filterfläche des Restfilterelementes 14 wird in Abhängigkeit des Volumens der zu filtrierenden Restmenge und der Trübstoffbelastung des Unfiltrats ausgelegt.

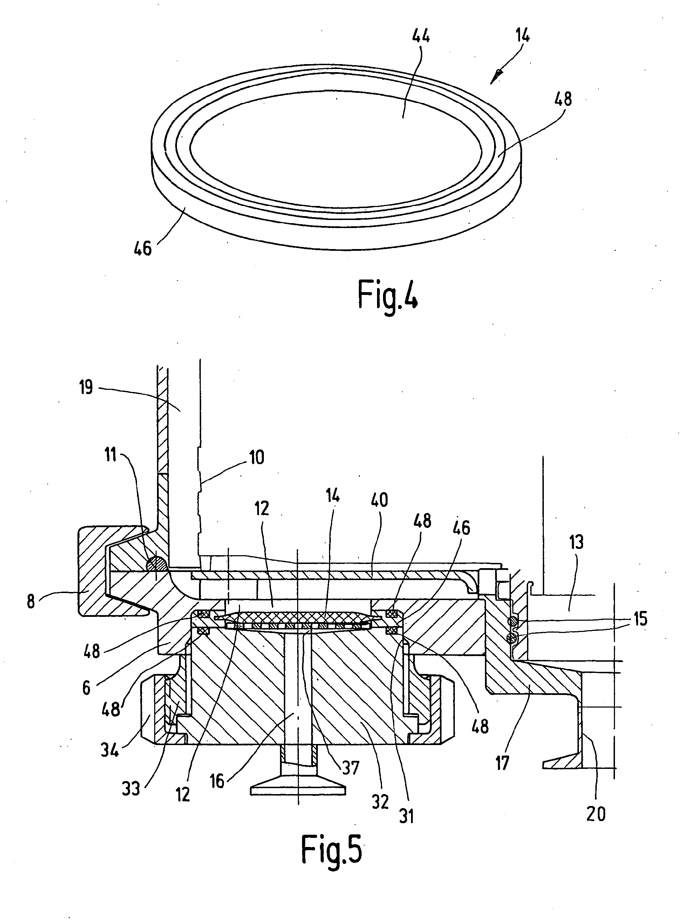

Das Ausführungsbeispiel gemäß Fig. 4 und 5 unterscheidet sich vom vorausgehenden Ausführungsbeispiel lediglich hinsichtlich der Bauweise des Restfilterelementes 14 und dessen Auflage am Einschubkörper 32. Die Besonderheit des Restfilterelementes 14 besteht darin, dass der kreisrunde Abschnitt des Filtermaterials 44 von einem Rahmen 46 eingefaßt ist. Beim gezeigten Beispiel ist der Rahmen 46 als Randumspritzung im Spritzgußverfahren um das Filtermaterial 44 herum aufgetragen. Als Material wird ein thermoplastischer Kunststoff bevorzugt, generell sind aber auch andere Materialien und Verarbeitungstechniken möglich. Durch die Randumspritzung ist das Filtermaterial 44 dichtend und tropffrei gerahmt. Der Rahmen 46 weist beim gezeigten Beispiel in einer Stirnfläche eine Dichtungsnut mit einem O-Ring 48 auf, während die entgegengesetzte Stirnfläche des Rahmens 46 mit einem entsprechenden O-Ring 48 an der Auflage am Umfangsrand des Einschubkörpers 32 zusammenwirkt. Durch den nur an einer Stirnfläche des Rahmens 46 befindlichen O-Ring 48 ergibt sich eine Markierung zur Kennzeichnung der Anströmseite des Filtermaterials 44.

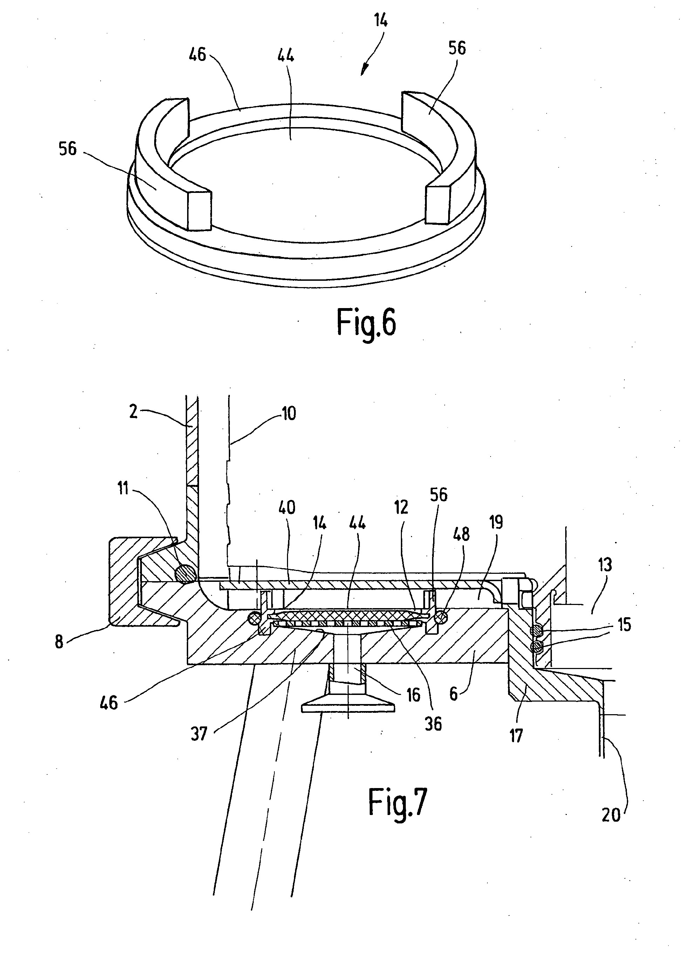

Bei dem Ausführungsbeispiel gemäß Fig. 6 und 7 ist das Filtermaterial 44 des Restfilterelementes 14 ebenfalls von einem Rahmen 46 eingefaßt, wobei an einer Stirnfläche des Rahmens 46 axial vorspringende Stege 56 vorgesehen sind. Anstelle eines Einschubkörpers 32, wie er bei den zuvor beschriebenen Bespielen den Boden 37 der Vertiefung 12 des Filtergehäuses 1 bildet, ist beim vorliegenden Beispiel die Vertiefung 12 unmittelbar in die Bodenplatte 6 eingearbeitet und bildet den zum Restfiltrat-Auslauf 16 geneigt verlaufenden Boden 37. Der Randbereich des Bodens 37 der Vertiefung 12 bietet einen Sitz für den Rahmen 46 des Restfilterelementes 14, welcher außenumfangseitig mittels O-Ring 48 radial gegenüber der Bodenplatte 6 abgedichtet ist. Die vorspringenden Stege 56 des Rahmens 46 liegen zur gegenseitigen Abstützung zwischen Restfilterelement 14 und Strömungsleitblech 40 an dessen Unterseite an. Die Stege 56 bilden auch die die Anströmseite anzeigende Markierung.

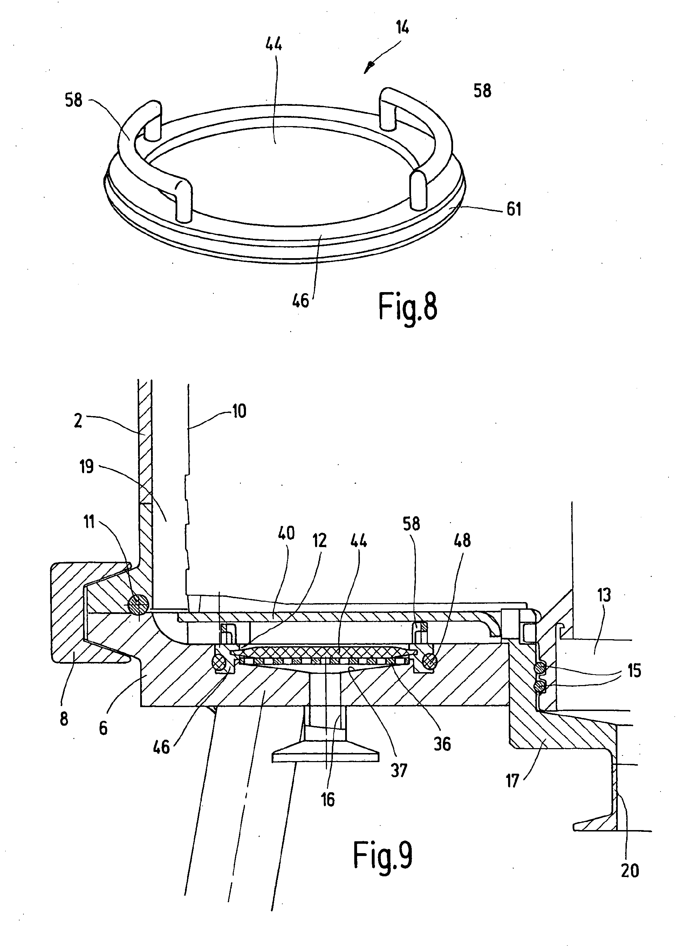

Das in Fig. 8 und 9 gezeigte, weitere Ausführungsbeispiel unterscheidet sich vom vorausgehenden Beispiel lediglich dadurch, dass der Rahmen 46 des Restfilterelementes 14 an Stelle der vorspringenden Stege 56 axial vorspringende Haltebügel 58 aufweist, die ebenfalls an der Unterseite des Leitbleches 40 anliegen und das Herausheben des Restfilterelementes 14 aus der Vertiefung 12 der Bodenplatte 6 erleichtern. Außerdem weist der Rahmen 46 am Umfangsrand eine Ringnut 61 für die axiale Abdichtung mittels O-Ring 48 gegenüber der Bodenplatte 6 auf.

Die Betriebsweise der Ausführungsbeispiele gemäß Fig. 4 und 5, Fig. 6 und 7 sowie Fig. 8 und 9 entspricht grundsätzlich derjenigen, wie sie unter Bezugnahme auf das Beispiel von Fig. 2 und 3 beschrieben wurde.

## Patentansprüche

1. Filtervorrichtung mit einem Filtergehäuse (1), in dem mindestens ein Haupt-Filterelement (10) einen Unfiltratraum (19) von einem Filtratraum (13) trennt, mit einem Unfiltrat-Zulauf (18) zum Zuführen von zu filtrierendem Fluid zum Unfiltratraum (19), einem Filtrat-Auslauf (20) zum Abführen des Filtrats aus dem Filtratraum (13), einem Restfilterelement (14) zum Filtrieren von Restmengen an Unfiltrat, die, ohne in den Filtratraum (13) zu gelangen, am Grund des Filtergehäuses (1) verbleiben, und mit einem Restfiltrat-Auslauf (16) zum Abführen des Filtrats der Restmengen, **dadurch gekennzeichnet, dass** das Restfilterelement (14) in einer Vertiefung (12) des Bodens (6) des Filtergehäuses (1) so angeordnet ist, dass das Filtermaterial (44) des Restfilterelementes (14) die tiefstgelegene Stelle des Filtergehäuses (1) bildet.

2. Filtervorrichtung nach Anspruch 1, **dadurch gekennzeichnet, dass** das Restfilterelement (14) durch einen Abschnitt eines ebenen Filtermaterials (44) gebildet ist, dessen obere Anströmseite im Bereich des Bodens (6) des Filtergehäuses (1) eine relativ zum Bodenbereich des Filtergehäuses (1) tiefstgelegene Ebene definiert.

3. Filterelement nach Anspruch 1 oder 2, **dadurch gekennzeichnet, dass** der Boden des Filtergehäuses (1) durch eine kreisrunde Bodenplatte (6) gebildet ist, mit der ein kreiszylinderförmiger Hauptteil (2) des Filtergehäuses (1) verbunden ist, an dessen oberen Rand sich ein das Filtergehäuse (1) oben abschließender Dom (3) anschließt.

4. Filtervorrichtung nach Anspruch 3, **dadurch gekennzeichnet, dass** der Filtrat-Auslauf (20) im Zentrum der Bodenplatte (6) gelegen und mit dem durch die Reinseite des Haupt-Filterelementes (10) gebildeten Filtratraum (13) unter Abdichtung gegenüber dem Unfiltratraum (19) verbunden ist.

5. Filtervorrichtung nach Anspruch 4, **dadurch gekennzeichnet, dass** die das Restfilterelement (14) aufnehmende Vertiefung (12) in der Bodenplatte (6) radial gegenüber dem Filtrat-Auslauf (20) versetzt angeordnet ist.

6. Filtervorrichtung nach Anspruch 5, **dadurch gekennzeichnet, dass** der Unfiltrat-Zulauf (18) an einem radial gegenüber dem Filtrat-Auslauf (20) versetzten Durchgang der Bodenplatte (6) angeordnet ist.

7. Filtervorrichtung nach einem der Ansprüche 3 bis 6, **dadurch gekennzeichnet, dass** ein Be- und Entlüftungsanschluß (22) an der höchstgelegenen Stelle des Gehäusedoms (3) angeordnet ist.

8. Filtervorrichtung nach einem der Ansprüche 1 bis 7, **dadurch gekennzeichnet, dass** das Restfilterelement (14) durch einen kreisrunden Abschnitt eines Filtermaterials (44) gebildet ist, der die in der Bodenplatte (6) ausgebildete kreisrunde Vertiefung (12) überspannt.

9. Filtervorrichtung nach einem der Ansprüche 2 bis 8, **dadurch gekennzeichnet, dass** der als Restfilterelement (14) vorgesehene Abschnitt des Filtermaterials (44) mit seiner Abströmseite an einem in der Vertiefung (12) befindlichen, Fluiddurchlässe aufweisenden, plattenartigen Abstützkörper (36) anliegt.

10. Filtervorrichtung nach Anspruch 9, **dadurch gekennzeichnet, dass** der Boden (37) der Vertiefung (12) mit seinem umfänglichen Randbereich die Auflage für den Abstützkörper (36) bildet und sich vom Randbereich ausgehend leicht konisch zu einem tiefer gelegenen Zentralbereich hin erstreckt, in den der Restfiltrat-Auslauf (16) mündet.

11. Filtervorrichtung nach einem der Ansprüche 3 bis 10, **dadurch gekennzeichnet, dass** die das Restfilterelement (14) aufnehmende Vertiefung (12) durch die Endfläche eines in eine kreisrunde Öffnung (31) der Bodenplatte (6) eingesetzten Einschubkörpers (32) gebildet ist.

12. Filtervorrichtung nach einem der Ansprüche 2 bis 11, **dadurch gekennzeichnet, dass** das Restfilterelement (14) einen im Umriß kreisrunden Abschnitt des Filtermaterials (44) sowie mindestens ein die Anströmseite und die Abströmseite des Filtermaterials (44) anzeigendes Gestaltsmerkmal (28, 30, 48, 56, 58) aufweist.

13. Filtervorrichtung nach Anspruch 12, **dadurch gekennzeichnet, dass** ungleichförmige Ausnehmungen (28, 30), die am Umfangsrand des Filtermaterials (44) in von 180 Winkelgrad verschiedenen Winkelabständen vorgesehen sind, das Gestaltsmerkmal bilden.

14. Filtervorrichtung nach Anspruch 13, **dadurch gekennzeichnet, dass** der runde Abschnitt der Filtermaterialbahn durch einen Rahmenkörper (46) eingefaßt ist, der mit die Anströmseite und die Abströmseite des Filtermaterials kennzeichnenden Markierungsmitteln (48, 56, 58) versehen ist.

15. Filtervorrichtung nach Anspruch 14, **dadurch gekennzeichnet, dass** der Rahmenkörper als Markierungsmittel mindestens einen, sich zur Ebene des Filtermaterials (44) senkrecht erstreckenden Vorsprung (56, 58) aufweist.

16. Filtervorrichtung nach Anspruch 15, **dadurch gekennzeichnet, dass** der ins Innere des Filtergehäuses (1) hinein vorstehende Vorsprung (56, 58) des Rahmenkörpers (46) des Restfilterelements (14) zur gegenseitigen Abstützung an einem im Bodenbereich des Filtergehäuses (1) angeordneten Strömungsleitblech (40) anliegt.
